Europäisches Patentamt

(19) European Patent Office (11) Publication number: **0 143 542**
Office européen des brevets **B1**

(12) **EUROPEAN PATENT SPECIFICATION**

(45) Date of publication of patent specification: **24.08.88** (51) Int. Cl.⁴: **G 21 C 17/06**

(21) Application number: **84307214.1**

(22) Date of filing: **19.10.84**

(54) **Apparatus for detecting defective nuclear reactor fuel rods.**

(30) Priority: **28.10.83 US 547291**

(43) Date of publication of application:
**05.06.85 Bulletin 85/23**

(45) Publication of the grant of the patent:
**24.08.88 Bulletin 88/34**

(84) Designated Contracting States:
**BE FR GB IT SE**

(56) References cited:
**FR-A-2 304 068**
**FR-A-2 498 759**
**US-A-3 823 068**
**US-A-3 940 313**

(73) Proprietor: **WESTINGHOUSE ELECTRIC CORPORATION**
**Westinghouse Building Gateway Center**
**Pittsburgh Pennsylvania 15235 (US)**

(72) Inventor: **Thomas, Donald Earl**
**317 Old Farm Road**
**Pittsburgh Pennsylvania (US)**

(74) Representative: **van Berlyn, Ronald Gilbert**
**23, Centre Heights**
**London, NW3 6JG (GB)**

EP 0 143 542 B1

Courier Press, Leamington Spa, England.

## Description

This invention relates generally to nuclear reactors, and more particularly to apparatus for detecting leaks in a nuclear fuel rod for a water-cooled nuclear reactor.

Nuclear reactors used for power generation typically have a large number of fuel assemblies arranged, in suitable configuration, to heat water so as to produce steam for turning electricity-producing generators. Each of the fuel assemblies typically contains from 49 to as many as 300 fuel rods which contain nuclear fuel. Therefore, a large nuclear reactor may contain as many as 40,000 fuel rods.

Each fuel rod is basically a metal tube approximately 1 to 1½ cm in diameter and typically from 2.5 to 4.5 m long. Suitable fissionable material, such as uranium oxide in the form of cylindrical fuel pellets, is stacked within the fuel rod. The upper end of the tube is void of fuel pellets and, when sealed, forms a plenum for gas. A small clearance space is provided around the fuel pellets to accommodate expansion or swelling of the fuel.

Since the metal tubes of the fuel rods contain the radioactive nuclear fuel of the system, inspection methods and apparatus for verifying the intengrity of the rods are of primary importance. Fission product gases and other radioactive materials leaking from a fuel rod during reactor operation can enter the reactor coolant system. Therefore, fuel rods are carefully inspected upon manufacture and periodically during operation, since initially good fuel rods may develop cracks, pinholes or other defects during their operation.

In earlier fuel assembly designs, the individual fuel rods were part of an integral assembly making it very difficult for failed fuel rods to be replaced individually. Prematurely discharging such a fuel assembly because of a failed fuel rod, on the other hand, is extremely costly. More recently, there has been increasing interest in the nuclear reactor utility industry for reconstitutable fuel assembly designs which facilitate removal and replacement of fuel rods.

A key step in the fuel assembly reconstitution process is the identification of the specific fuel rod or rods in the assembly which have failed due to cracks, pinholes or other penetrations of the tube or cladding of the fuel rod. While a number of methods and devices have been utilized in the past for detecting fuel rod failures, such techniques of the prior art have generally not provided a simple, reliable, rapid and safe method for performing the rod failure inspection.

The desired rod failure detection method should provide for identification of the damaged rod without requiring any significant design changes to the fuel. Any design changes required by the detection mechanism should have minimal impact on the basic fuel rod (e.g. not use up a significant amount of gas plenum space) and not increase the risk of fuel failure. Accordingly, any parts of the detection system required to be added internally of the fuel rod should not significantly increase the risk of introducing moisture into the rod, should not swell excessively and should not give off significant quantities of gas under irradiation. In addition, such detection system parts should not be free to vibrate or cause wear or other possible reliability or quality control problems. The fuel rod failure detection method should provide a high probability of being able to readily distinguish between a failed and unfailed rod, and should require little if any dismantling of the fuel assembly in order to test the individual fuel rods. Further, the equipment or apparatus used in the rod failure detection process should not present significant risk of damaging the fuel rods and should be capable of providing testing of an entire fuel assembly in a reasonably short time. Various leak detection methods and apparatus have been used in the past, but none has simultaneously satisfied all of the above-mentioned requirements.

One technique for detecting fuel rod failures creates a differential pressure between the inside of the fuel rod and the surrounding liquid bath within which the rod is immersed. The theory behind this technique is that the differential pressure will be sufficient to expel a detectable bubble of fluid or other material from the interior of the defective rod through the defect in the rod cladding and into the surrounding bath. Such emission of the bubble produces a sound or mechanical vibration of the fuel rod which is detected by appropriate sonic sensing means. Such technique can also include vibration of the fuel rod to enhance the bubble emission. Besides requiring special apparatus for effecting a differential pressure change between the fuel rods and the surrounding bath, such technique requires fairly sophisticated sensing means for detecting the bubble emission, and can result in damage to the fuel assembly itself during the vibration process. Another leak detection technique that has been proposed is to test individual fuel rods by ultrasonic probes to determine the presence of water that has entered through the leak and collected within the rod casing. This technique, however, may not be reliable for small leaks wherein a detectable amount of water has not yet penetrated the casing. Further, certain fuel assembly configurations do not physically lend themselves to the proper placement of ultrasonic probes at those positions required to conduct meaningful measurements.

Other methods for detecting breaches in the cladding of fuel rods have generally required alteration of the fuel rod by introducing apparatus within the plenum or end cap of the fuel rod. Such apparatus provides a stimulus or movement in response to a defect in the fuel rod, which can be externally detected by appropriate means. Several of such detector structures provide visual indications of a leaking fuel rod, such as by causing deformations in the outer jacket or in a specially designed sheath of the fuel rod. Such deformations are generally detected by gauges, optical instruments or the like.

There have also been a number of leak detector structures which have incorporated the principle of moving a ferromagnetic object within the end cap or the plenum of the fuel rod in response to a breach in the fuel rod cladding. Movement of the ferromagnetic material within the fuel rod has generally been detected external of the fuel rod by appropriate magnetic sensors. Such devices generally are designed to cause movement of the ferromagnetic detector as a result of a pressure change within the fuel rod when a leak occurs, or as a result of decomposition of a material which normally holds the ferromagnetic material in a fixed position which indicates a secure fuel rod assembly. Such holding material is typically selected so as to disintegrate when exposed to the coolant which passes through a leak in the fuel rod cladding. An example of such a device is illustrated in U.S. Patent 3,666,625 issued May 30, 1972, and assigned to Westinghouse Electric Corporation.

While such prior art structures and techniques for detecting fuel rod leaks have individually addressed various ones of the desired criteria for such structures, no single device or method has simultaneously satisfied all of the previously described criteria. In general, either the leak detection structures implanted within the fuel rods were unduly complex so as to make their operation unreliable or inaccurate when exposed to the rigors of the reactor environment, or the method required for detecting movement of the ferromagnetic material within the fuel rod required removal of the fuel rod from the fuel assembly or expensive or intricate test equipment.

The preamble portion of claim 1 is known from FR—A—2498759.

It is the principal object of the invention to effectively address and overcome most of the above-mentioned deficiencies of prior-art fuel-rod leak detector structures while simultaneously satisfying the above-defined criteria for such structures. As will become readily apparent from the following description, the detector apparatus of this invention, which is inserted within the plenum of the fuel rod is extremely simple, has minimal impact on the design or operation of the basic fuel rod, requires no intricate or moving parts and enables reliable rapid detection of a leaky fuel rod by a sensor placed external of the fuel rod without requiring removal of the fuel rod from its fuel assembly or from the coolant bath in which it is normally submersed.

The invention provides a simple, cost effective and reliable apparatus for determining leaks or breaches within the external cladding or jacket of a nuclear reactor fuel rod. While the invention in principle applies to the detection of leaks of any type of coolant it will be described herein as employed in connection with water such as currently used as a coolant with most nuclear reactors. Unlike prior-art leak detection techniques, the invention does not depend on any movement of parts or materials within the fuel rod for detecting or providing an indication of a fuel rod leak. Rather, the invention depends directly upon the physical properties of the material itself that is used in the detection process—properties which can be carefully selected and designed for the particular fuel rod application, with the certainty of predictable response when such material is subjected to a leaky environment within the fuel rod.

This invention simply requires placement or insertion of a detector mass in the form of a solid element and having particular physical characteristics, within the plenum of a fuel rod, and preferably at a location adjacent the upper end plug or cap of the rod. Such detector mass must be of a relatively low electrical resistivity, as compared to that of the surrounding medium of the fuel rod in which it is placed, and of a resistivity which enhances the production of eddy currents. The detector mass must also be highly reactive with and corrosible in the presence of the coolant (i.e. water or water vapor) whose leakage into the fuel rod is to be detected. When the detector mass is fixedly secured within the fuel rod, the method of detecting a leak in the fuel rod cladding merely involves directly sensing the corrosive state of the detector mass from external of the fuel rod by placing an electromagnetic field-producing probe in proximity with the end of the fuel rod bearing the detector mass, and measuring the eddy current response of the detector mass. If the measured response indicates that significant eddy currents have been produced in the enclosed detector mass, the fuel rod cladding does not have leaks. If, however, the measured response indicates that no or negligible eddy currents have been produced in the enclosed detector mass, there is a high probability that the fuel rod cladding has been breached and that coolant leaking through the cladding into the fuel rod has corrosively degenerated the detector mass to a state wherein it can no longer effectively produce eddy currents in response to the applied electromagnetic field.

Application of the electromagnetic field to the detector mass is performed by placing an eddy current probe in the form of an electrical coil in close proximity to that end cap which is closest to the detector mass enclosed within the fuel rod. Such electrical coil may be of either a generally planar type or of cylindrical shape, and is oriented in generally coaxial alignment with the fuel rod.

The electrical coil is energized with a high frequency electrical signal (on the order of 1000 hertz) such that the electromagnetic field produced by the coil longitudinally penetrates the end cap of the fuel rod and projects into or through the position at which the detector mass was mounted within the fuel rod plenum. The energization frequency must be high enough to cause eddy currents to be produced within the detector mass, but must not be so high so as to only produce "skin effect" eddy currents in the fuel rod casing. The effect of the eddy currents, if any, produced in the detector mass is reflected back through the electromagnetic field to the electric coil and determines in part the electrical current flowing through, or the impedance of the coil. Such current flow or impedance is measured against a known value for measurements taken when the indicator mass was first placed within the fuel rod, in order to determine the seal integrity of the fuel rod cladding. Such eddy current probe measurements can be readily performed either when the fuel rod is removed from the reactor coolant or when it is still submersed within the coolant.

The invention accordingly resides in a nuclear fuel rod for use in a coolant, comprising a tubular jacket containing fissill fuel and having end plugs which seal the jacket att both ends thereof, said jacket containing a leakage detector mass capable of having detectable eddy currents induced therein through the application of an electromagnetic field, and comprising a material which degeneratively reacts with said coolant so as to detectably reduce the eddy-current producing capability of the detector mass, characterized in that said leakage detector mass is a solid element fixedly disposed at a predetermined location within said jacket.

A preferred detector mass, particularly useful for nuclear fuel rods which are inserted within a water coolant bath, comprises aluminum of relatively high purity. It will be understood, however, that it would be within the scope of the invention to select other appropriate materials and purities ther1of. The material selection will depend upon the relative electrical resistivity or conductivity of the material in relation to the tubular jacket and end cap of the fuel rod, and its ability to degeneratively react with the coolant leaking into the fuel rod at the operating plenum temperature and pressure of the fuel rod. It is preferable that the material of the detector mass be selected such that substantially complete degeneration of the detector mass occurs in the presence of the coolant, within at least a 24-hour period of time. Substantial degeneration occurs, within the scope of the invention, when the detector mass no longer has the ability to effectively produce eddy currents in response to an applied incident electromagnetic wave. The particular shape of the detector mass may vary, preferred configuration and orientations being those which will enhance the production of eddy currents, such as ring-shaped or cup-shaped configurations coaxially located with respect to the fuel rod. The density and surface texture of the detector mass likewise may vary from a solid material to an irregular material or could even be of sintered configuration. Preferred embodiments of the invention will now be described, by way of example only, with reference to the accompanying drawings, in which:—

Figure 1 is an elevational view, partially in section, of a typical fuel assembly of a nuclear reactor;

Fig. 2 is an enlarged sectional view with portions thereof broken away, of one of the fuel rods of the fuel assembly of Fig. 1;

Figs. 3 to 8 are enlarged sectional views of the upper portion of the fuel rod disclosed in Fig. 2, which show different embodiments of the invention having regard to the corrodible detector mass utilized;

Fig. 9 is a block diagram diagrammatically illustrating a sensor apparatus for detecting the state of deterioration of the detector mass within the fuel rod; and

Fig. 10 is an enlarged diagrammatic view of the upper end cap of a fuel rod embodying the invention, together with an eddy-current producing probe positioned to test for leaks.

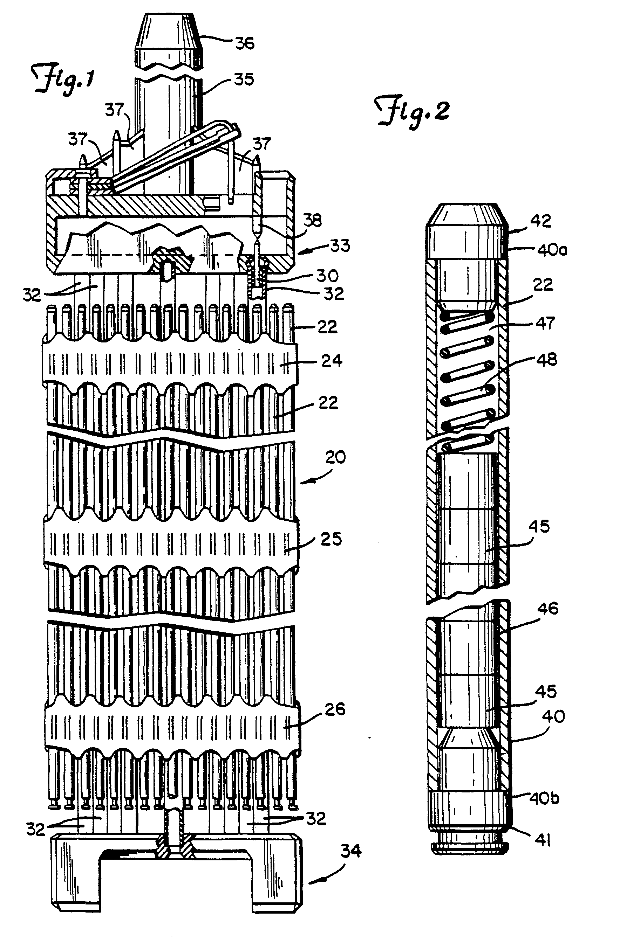

Referring now to the drawings wherein like reference characters designate like parts throughout the several views, and referring in particular to Fig. 1, the fuel assembly 20 illustrated therein comprises a plurality of fuel rods 22 assembled in parallel and held in spaced relationship with respect to each other by a plurality of support grids 24, 25, and 26 spaced along the fuel assembly. Only three support grids are illustrated in Fig. 1 but it will be understood that there could be more such support grids, as required to provide adequate support for the fuel rods 22. The fuel rods 22 are closely spaced by the support grids 24, 25, and 26 along their entire length, the separation between fuel rods being approximately only 0.30 and 0.50 cm. In a typical fuel assembly, the fuel rods 22 have an outside diameter of from 1 cm to $1\frac{1}{4}$ cm, approximately, and a length ranging from about 2.5 m to 4.5 m, and the complete assembly will typically contain from 49 to as many as 300 fuel rods.

A plurality of control rods, such as control rod 30, are reciprocally movable in control-rod guide tubes or thimbles 32 located at predetermined positions in each selected fuel assembly within the reactor. The control rods are used to control the fission process. The control rod guide tubes are attached to the support grids 24, 25 and 26 and are interspersed (in top plan, not illustrated) among the fuel rods 22 throughout the fuel assembly 20. The fuel assembly also includes a top nozzle 33 and a bottom nozzle 34 to which opposite ends of the control rod guide tubes 32 are attached, thereby forming a unitized fuel assembly which can be conveniently handled without risk of damage to the assembly components. The guide tubes 32 typically include sleeve members for welding to the upper and lower support grids 24 and 26 and to the top and bottom nozzles 33 and 34.

The top nozzle 33 includes a rod cluster control assembly, generally designated with numeral 35, which was an internally threaded cylindrical member 36 and radially extending arms 37. A connector 38 connects each control rod 30 with the arms 37 such that movement of the rod cluster assembly will cause the control rods to move similarly within the control-rod guide tubes, thereby to control the fission process, as well known in the art.

Referring now to Fig. 2 illustrating a fuel rod 22, each fuel rod has a tubular outer jacket or casing 40 having its lower end 40b and its upper end 40a sealed by a lower end plug or cap 41 and an upper end plug or cap 42, respectively. Stacked within the casing 40 are cylindrical fuel pellets 45 which have an outside diameter slightly less than the inside diameter of the casing 40 so as to define a gap 46 allowing for radial swelling or expansion of the pellets 45 during operation. The uppermost fuel pellet 45 is spaced from the upper end plug or cap 42 to define a space or plenum 47 in which is disposed a spring 48 under compression between the upper end plug 42 and the uppermost fuel pellet to retain the fuel pellets in their desired positions.

Typically, the casing 40 and the upper and lower end plugs 41 and 42 are constructed of a zirconium alloy material having a relatively high electrical resistivity, the upper and lower plugs 42 and 41 are welded to the upper and lower ends 40a and 40b, respectively, of the casing 40, and the compression spring 48 made of a material which likewise has a relatively high electrical resistivity, such as 304 stainless steel. The fuel pellets 45 are made of a suitable fissionable material, typically comprising uranium oxide. The plenum 47 is often prepressurized with an inert gas, such as helium, in order to minimize the differential pressure between fluids within the fuel rod and the coolant bath surrounding it when in use. The length of the plenum 47 can vary according to design choice; in a typical fuel rod having an effective internal cavity length (i.e. distance between the upper and lower end plugs) of 3.8 m, the plenum length will be approximately 15 cm.

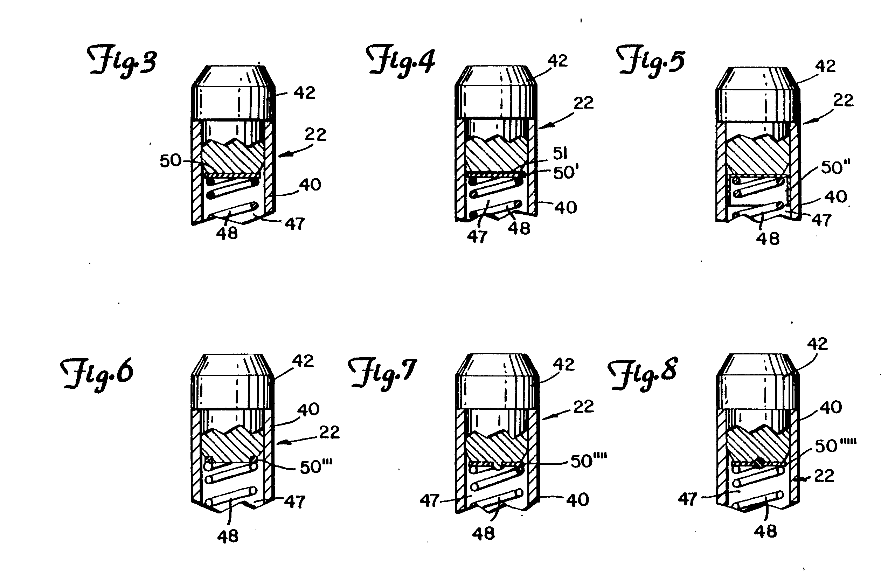

Referring now to Fig. 3, the fuel rod embodying the invention contains a highly conductive detector mass 50 in the form of a solid element inserted in the plenum 47 adjacent the lower surface of the upper end plug 42, which solid element will given an unambiguous response to an eddy current probe but will corrode to form oxide upon exposure to a coolant, such as water leaking into the plenum following a cladding breach, after which it will not respond to the eddy current probe. In the arrangement illustrated in Fig. 3, the detector mass 50 is simply held in place against the lower surface of the upper end plug 42 by the spring 48.

The detector mass 50 is selected for its low electrical resistivity, which is advantageous for eddy current detection, as hereinafter described in more detail. The material from which the detector mass 50 is made must also be highly corrodible (i.e. degeneratively reactive) in the presence of the coolant leaking into a failed fuel rod. In the preferred embodiment, such coolant is water which may be present in the plenum in the form of water, water vapor or steam. While the invention is not necessarily limited to the use of a detector mass material having any particular numerical electrical resistivity, the prime consideration is that the electrical resistivity of the detector mass material be as low as possible within design constraints so as to effectively produce eddy currents, and that it be substantially lower than the resistivity of the adjacent metallic portions of the fuel rod (i.e. the upper-end plug 42, the jacket casing 40, and the spring 48). It is preferable that the electrical resistivity of the detector mass be 10 or more times less than that of such surrounding materials, in order to provide for reliable detection by means of eddy currents probe techniques. Similarly, while the invention is not limited to the use of any particular type of metal or composition thereof for the detector mass 50 with regard to its ability to corrode in the presence of the coolant leaking into the fuel rod, such material disposed within the plenum should degenerate (i.e. react and oxidize) or corrode substantially completely when continuously exposed to the leaked coolant, under operating pressures and temperatures of the fuel rod, for a period of not more than 24 hours and, preferably, for not more than 1/2 or even 1/4 of that time inverval.

A preferred detector mass non-ferromagnetic material which has been found to simultaneously satisfy the requirements for relatively low electrical resistivity and the ability to rapidly corrode in the presence of water is aluminum having a relatively high purity. While the lower purity limit of the material that can be effectively used to accomplish the purposes of this invention will depend upon a number of design constraints of the fuel rod, such as operating temperature, and porosity of the material, and the physical shape of the material, the following commercially available grades of aluminum have been found to be particularly suitable for constructing the detector mass 50:

| Aluminum type | Percent of aluminum | Electrical resistivity (micro-ohm centimeter) |
|---|---|---|
| EC | 99.45 minimum | 2.8 |
| 1060 | 99.60 minimum | 2.8 |
| 1100 | 99.0 minimum | 2.92 |

In contrast, the resistivity of a typical fuel rod cladding of Zircaloy is approximately 75 micro-ohm centimeter.

The dimensions of the solid detector element are a matter of design choice. The solid detector element must be sized to be compatible with the fuel rod dimensions, should be thin enough to provide rapid destructible corrosion in the presence of coolant vapor leaking into the fuel rod, and yet must be thick enough to provide a meaningful eddy current response and not be susceptible to destructive corrosion in the presence of residual gases normally found in the fuel rod. The inventor has found that unalloyed Type 1100 aluminum (as above described) will corrode completely in a matter of 4 hours at 315°C (600°F) in the presence of water, whereas the more widely used aluminum alloys do not corrode as rapidly. It has also been found that unalloyed aluminum has a relatively low electrical resistivity as indicated by the above tabulated Figures. It should be noted that the typical operating temperature attained within the plenum of a fuel rod operatively inserted in a nuclear reactor ranges from approximately 260°C to 329°C. Those skilled in the art will also appreciate the fact that a detector mass having increased surface area either as a result of holes, notches or irregularities being formed therein, or because the material itself is sintered, will increase the physical exposure of the detector mass material to the reactive coolant, thereby enhancing the corrosion process.

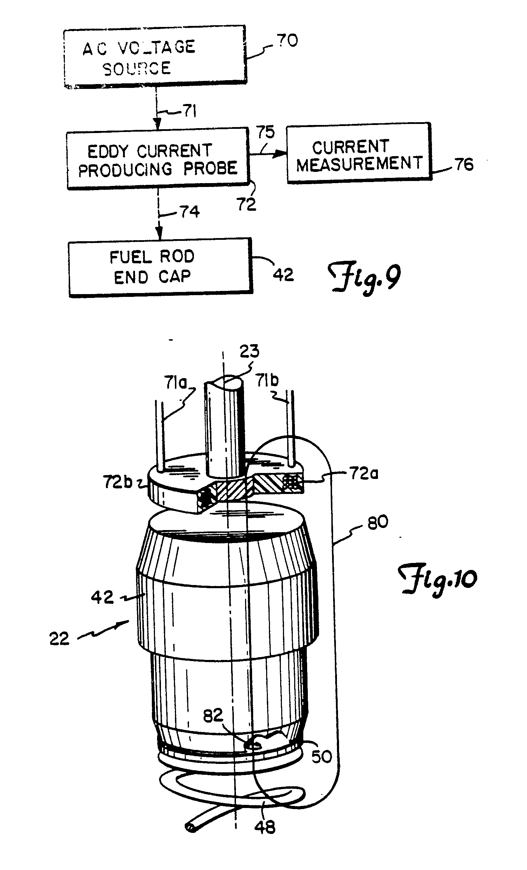

With the proper detector mass 50 fixedly inserted within the plenum 47 of the fuel rod 22 (as for example illustrated in Fig. 3), the leak detection measurement process for the fuel rod can be readily performed. The means for performing such measurement are diagrammatically illustrated in block diagram form in Fig. 9. Referring thereto, a high frequency AC voltage source 70 is operatively connected by means of a signal flow path 71 to energize an eddy current producing probe 72. Such eddy current probe sources are well known to those skilled in the art. The eddy current producing probe 72 comprises a simple electromagnetic coil either in the flattened pancake shape as illustrated in Fig. 10, or alternatively in the shape of an extended cylindrical coil (not illustrated). In general, such eddy current producing probe 72 comprises one or a plurality of coil windings 72a having a protective insulator coating 72b and connected for energization to the AC voltage source 70 by means of a pair of insulated wires 71a and 71b comprising the signal flow path 71. The leak detection process is performed by lowering or bringing the eddy current producing probe 72 into engagement or close proximity with the upper end plug 42 of a fuel rod, as diagrammatically illustrated by the dashed line 74 in Fig. 9, and as pictorially illustrated in Fig. 10. As depicted in Fig. 10, the coils 72a of the eddy current producing probe 72 are generally coaxially aligned with the longitudinal axis 23 of the fuel rod 22; however, exact coaxial alignment is not necessary for effective leak detection measurement. When oriented in such position, the probe coils 72a are energized with a high frequency AC voltage from the voltage source 70, creating an electromagnetic field, one flux line of which is illustrated at 80 in Fig. 10. Energization of the eddy current probe 72 is sufficiently strong so as to cause the flux path 80 produced thereby to extend down through the upper end plug 42 and through that position at which the detector mass 50 is, or was, mounted. If the detector mass 50 is intact (i.e. has not corroded or degenerated) as illustrated in Fig. 10, the flux path 80 will produce an eddy current, illustrated at 82, within the detector mass 50. Such eddy currents 82 produced within the detector mass 50 are readily detectable by measuring the electrical current passing through the eddy current probe. Such current measurement (i.e. eddy current detection) is made by current measurement apparatus well known to those skilled in the art, and diagrammatically illustrated at 76 in Fig. 9, with the signal flow path between the eddy current producing probe 72 and the current measurement functional block 76 being depicted at 75.

When the above eddy current measurement process is performed on a sound (i.e., non-leaking) fuel rod, the detector mass 50 will be present within such fuel rod in its original (uncorroded) state. In such state, the detector mass 50 will enhance the creation of eddy currents which will readily be detected by the current measurement apparatus 76, indicating a "safe" fuel rod. However, if the fuel rod had previously suffered a breach of its cladding jacket 40 such that coolant had penetrated its plenum 47, the detector mass 50 would have corroded or completely degenerated to such an extent that few, if any, eddy currents would be produced by the detector mass in response to the electromagnetic flux lines 80 from the probe 72. In such case, the current measurement apparatus 76 will indicate the absence of produced eddy currents during the measurement process, indicating a "leaky" fuel rod.

While the invention has been described with reference to a disc-shaped solid detector element, it will be appreciated that the invention is not limited to a particular configuration or shape of the solid detector element, and does not require that the solid detector element be made of a single material or layer. For example, in the embodiment illustrated in Fig. 4 an additional disc or layer 51 of aluminum oxide is interposed between the conductive detector mass 50' and the upper end plug 42. Such oxide material could be inserted as illustrated, to prevent possible local melting of the primary detector mass 50' during welding of the upper end plug to the cladding jacket 40. Alternatively, the oxide layer could be in the form of an anodized film deposited directly onto the upper surface of the aluminum detector mass disc 50'. Another configuration for the detector mass is illustrated at 50" in Fig. 5. Referring thereto, the detector mass 50" is configured in the shape of an inverted cup, which enhances the eddy current probe response.

While the detector mass 50 as illustrated in Figs. 3, 4, and 5 is configured for ready placement within existing fuel rod assemblies so as to require no modification whatsoever to the assembly process other than for insertion of the detector muss between the spring 48 and the upper end plug 42, other configurations of the detector mass are conceivable within the scope of this invention. Several such alternatives are illustrated in Figs. 6, 7 and 8, wherein the detector mass is first secured to the upper end plug 42 prior to welding of the end plug 42 to the cladding 40. Such configurations may require slight, but minimal modification of the upper end plug 42 as illustrated. Referring to Fig. 6, the detector mass 50′′′ is in the form of a ring, which also enhances eddy current probe response. Fig. 7 illustrates a ring-shaped detector mass 50′′′′ being secured to the upper end plug 42 by a peening operation. Fig. 8 illustrates the ring-shaped detector mass 50′′′′ being secured to the upper end plug 42 by means of a spot welding operation.

While specific examples and configurations of the detector mass shape and method of securing same within the fuel rod plenum have been described herein, it will be readily apparent to those skilled in the art that other appropriate configurations and means of securing the mass can be envisioned by those skilled in the art. The invention is not limited to any particular detector element configuration, material or method of securing such detector mass within the fuel rod. It will also be appreciated that while the invention has been described in its application for measuring an eddy current response in a single fuel rod, the invention could readily be applied to simultaneously or sequentially scan a plurality of fuel rods by using appropriate probe fixturing, to further speed the process. It will also be appreciated that due to the insulated nature of the eddy current producing probe, such probe can be inserted within the coolant while the fuel rods are actually submersed therein. Further, since all of the measurements can be performed at one end of the fuel rod, which is typically exposed in a fuel assembly, time consuming removal of individual fuel rods from the fuel assembly for measurement purposes is not required. Further, since the invention requires no moving parts within the fuel rod under test to effect a proper measurement, reliability and accuracy of the process is significantly enhanced.

### Claims

1. A nuclear fuel rod for use in a coolant, comprising a tubular jacket containing fissile fuel and having end plugs which seal the jacket at both ends thereof, said jacket (40) containing a leakage detector mass (50) capable of having detectable eddy currents induced therein through the application of an electromagnetic field, and comprising a material which degeneratively reacts with said coolant so as to detectably reduce the eddy-current producing capability of the detector mass, characterized in that said leakage detector mass (50) is a solid element fixedly disposed at a predetermined location within said jacket (40).

2. A nuclear fuel rod according to claim 1, characterized in that said material has a rate of degenerative reaction with said coolant resulting in a substantial reduction of the eddy-current producing capability of the detector mass within less than 24 hours.

3. A nuclear fuel rod according to claim 1 or 2 characterized in that said material comprises aluminum having a purity of at least 99 percent.

4. A nuclear fuel rod according to claim 1, 2 or 3, characterized in that the solid element (50) is fixedly supported on one (42) of said end plugs (41, 42), the solid element (50) and said one end plug (42) having interposed therebetween a layer of aluminum oxide (510).

5. A nuclear fuel rod according to claim 4, characterized in that said layer of aluminum oxide is a deposited layer formed on a surface of said one end plug (42).

6. A nuclear fuel rod according to claim 1, 2, 3, 4 or 5, characterized in that said solid element comprises a disc (50 or 51′).

7. A nuclear fuel rod according to claim 1, 2, 3, 4 or 5, characterized in that said solid element comprises a ring (50′′′ or 50′′′′ or 50′′′′′) substantially coaxial with respect to said jacket.

8. A nuclear fuel rod according to claim 4 or 5, characterized in that said solid element comprises a cup-shaped member (50′′) having its open end directed away from said one end plug and toward the fissile fuel (45) within the jacket.

9. A nuclear fuel rod according to any one of claims 4 to 8, characterized in that said solid element (50) and the fissile fuel (45) within the jacket (40) have interposed therebetween a compression spring (48) seating the solid element against said one end plug (42).

### Patentansprüche

1. Ein Kernbrennstoffstab zur Verwendung in einem Kühlmittel, bestehend aus einem rohrförmigen Mantel, der spaltbaren Brennstoff enthält und Endstopfen aufweist, die den Mantel an dessen beiden Enden abdichtet, wobei der Mantel (40) eine Leckdetektormasse (50) enthält, die in der Lage ist, in sich meßbare Wirbelströme durch Anwendung eines elektromagnetischen Feldes zu induzieren, und mit einem Material, das degenerativ mit dem Kühlmittel reagiert, um so die wirbelstromerzeugende Eigenschaft der Detektormasse meßbar zu reduzieren, dadurch gekennzeichnet, daß die Leckdetektormasse (50) ein festes Element ist, das an einer vorbestimmten Stelle innerhalb des Mantels (40) fest angeordnet ist.

2. Ein Kernbrennstoffstab nach Anspruch 1, dadurch gekennzeichnet, daß das Material eine Degenerationsreaktionsrate mit dem Kühlmittel besitzt, die zu einer wesentlichen Reduzierung der wirbelstromerzeugenden Fähigkeit der Detektormasse innerhalb weniger als 24 Stunden führt.

3. Ein Kernbrennstoffstab nach Anspruch 1 oder 2, dadurch gekennzeichnet, daß das Material Aluminium umfaßt, das eine Reinheit von zumindest 99% besitzt.

4. Ein Kernbrennstoffstab nach Anspruch 1, 2 oder 3, dadurch gekennzeichnet, daß das feste Element (50) an einem Ende (42) der Endstopfen (41, 42) fest gehalten wird, wobei das feste Element (50) und der eine Endstopfen (42) zwischen sich eine Schicht von Aluminium-oxid (510) angeordnet besitzten.

5. Ein Kernbrennstoffstab nach Anspruch 4, dadurch gekennzeichnet, daß die Schicht aus Aluminiumoxid eine abgelagerte Schicht ist, die auf einer Oberfläche des einen Endstopfens (42) gebildet ist.

6. Ein Kernbrennstoffstab nach Anspruch 1, 2, 3, 4 oder 5, dadurch gekennzeichnet, daß das Feststoffelement eine Scheibe (50 oder 51') umfaßt.

7. Ein Kernbrennstoffstab nach Anspruch 1, 2, 3, 4 oder 5, dadurch gekennzeichnet, daß das feste Element einen Ring (50''' oder 50'''' oder 50''''') enthält, der im wesentlichen bezüglich das Mantels koaxial ist.

8. Ein Kernbrennstoffstab nach Anspruch 4 oder 5, dadurch gekennzeichnet, daß das. feste Elemente ein becherförmiges Glied (50'') umfaßt, dessen offenes Ende weg von dem einen Endstopfen und in Richtung auf den spaltbaren Brennstoff (45) innerhalb des Mantels gerichtet ist.

9. Ein Kernbrennstoffstab nach einem der Ansprüche 4 bis 8, dadurch gekennzeichnet, daß das feste Elemente (50) und der spaltbare Brennstoff (45) innerhalb des Mantels (40) zwischen sich eine Kompressionsfeder (48) aufweisen, die das feste Element gegen den einen Endstopfen (42) anliegen läßt.

**Revendications**

1. Barre de combustible nulcéaire utilisable dans un fluide de refroidissement, comprenant une gain tubulaire contenant le combustible fissile et comportant des bouchons d'extrémité qui assurent l'étanchéité de la gaine à ses deux extrémités, cette gain (40) contenant une masse (50) détectrice de fuites dans laquelle des courants de Foucault détectables peuvent être induits par application d'un champ électromagnétique, et comprenant une matière qui réagit de manière dégénérescente avec ce fluide de refroidissement de manière à opérer une réduction détectable de la capacité d'induction de courants de Foucault de la masse détectrice, caractérisée en ce que cette masse (50) détectrice de fuites est un élément solide fixé à un emplacement prédéterminé à l'intérieur de la gaine (40).

2. Barre de combustible nucléaire suivant la revendication 1, caractérisé en ce que cette matière présente une vitesse de réaction de dégénérescence avec le fluide de refroidissement, ayant comme conséquence une réduction sensible de la capacité d'induction de courants de Foucault de la masse détectrice en moins de 24 heures.

3. Barre de combustible nucléaire suivant la revendication 1 ou 2, caractérisée en ce que cette matière comprend l'aluminium à un degré de pureté d'au moins 99 pour cent.

4. Barre de combustible nucléaire suivant la revendication 1, 2 ou 3, caractérisée en ce que l'élément solide (50) est fixé à l'un (42) des bouchons (41, 42) d'extrémité, une couche d'alumine (51) étant interposée entre cet élément solide (50) et ce bouchon (42) d'extrémité.

5. Barre de combustible nucléaire suivant la revendication 4, caractérisée en ce que cette couche d'alumine est une couche déposée et formée sur une face de ce bouchon (42) d'extrémité.

6. Barre de combustible nucléaire suivant la revendication 1, 2, 3, 4 ou 5, caractérisée en ce que cet élément solide est constitué d'un disque (50 ou 50').

7. Barre de combustible nucléaire suivant la revendication 1, 2, 3, 4 ou 5, caractérisée en ce que cet élément solide est constitué d'une bague (50''' ou 50'''' ou 50''''') sensiblement coaxiale avec la gaine.

8. Barre de combustible nucléaire suiant la revendication 4 ou 5, caractérisée en ce que cet élément solide est constitué d'un élément en forme de cuvette (50'') dont l'extrémité ouverte est dirigée à l'opposé du bouchon d'extrémité et tournée vers le combustible fissile (45) contenu à l'intérieur de la gaine.

9. Barre de combustible nucléaire suivant l'une quelconque des revendications 4 à 8, caractérisée en ce qu'un ressort de compression (48) est interposé entre cet élément solide (50) et le combustible fissile (45) contenu à l'intérieur de la gaine (40), ce ressort de compression (48) faisant porter l'élément solide contre le bouchon (42) d'extrémité.

0 143 542

*Fig.1*

36
35
37
37
37
38
33
30
32
32
22
24
22
20
25
26
32
32
34

*Fig.2*

42
40a
22
47
48
45
46
45
40
40b
41

1

Fig.5

Fig.4

Fig.3

Fig.8

Fig.7

Fig.6

AC VOLTAGE SOURCE ─70

─71

EDDY CURRENT PRODUCING PROBE 75 → CURRENT MEASUREMENT ─76

72

─74

FUEL ROD END CAP ─42

*Fig.9*

*Fig.10*

3